# EUROPEAN PATENT SPECIFICATION

(11) **EP 2 514 503 B1**
(45) Date of publication and mention of the grant of the patent: **11.06.2014**
(21) Application number: 12161235.2
(22) Date of filing: 26.03.2012
(51) Int. Cl.: B01D 46/24

(54) **Plugged honeycomb structure**
Abgedichtete Wabenstruktur
Structure en nid d'abeille raccordée

(30) Priority: 31.03.2011 JP 2011078703
(43) Date of publication of application: 24.10.2012
(73) Proprietor: NGK Insulators, Ltd., Nagoya-shi, Aichi 467-8530 (JP)
(72) Inventor: Takagi, Tomoyuki, Nagoya-shi, Aichi 467-8530 (JP)
(74) Representative: Paget, Hugh Charles Edward

(56) References cited:
- EP-A1- 1 484 100
- EP-A1- 1 787 702
- WO-A1-2008/037919
- US-A1- 2007 169 451

## Description

### Background of the Invention and Related Art Statement

The present invention relates to a plugged honeycomb structure. More specifically, the present invention relates to a plugged honeycomb structure capable of inhibiting the increase of the pressure loss and improving the durability in a good manner.

Gas discharged from internal combustion engines such as a diesel engine, various combustion apparatuses, and the like contains a great amount of particulate matter (PM) mainly containing soot. Since release of PM in the air in situ causes environmental pollution, a diesel particulate filter (DPF) for trapping PM is mounted in the exhaust system for exhaust gas.

For such a DPF, there is used a honeycomb structure having porous partition walls separating and forming a plurality of cells functioning as fluid passages for fluid (exhaust gas, purified gas). Thus, in a honeycomb structure are disposed plugging portions for plugging openings of cells in openings of predetermined cells (inflow cells) on fluid (exhaust gas) outflow side end face and openings of the remaining cells (outflow cells) on the fluid (exhaust gas) inflow side end face to use the honeycomb structure as a plugged honeycomb structure (honeycomb filter).

In the plugged honeycomb structure, when exhaust gas is allowed to flow in from the inflow cells, particulate matter in the exhaust gas is trapped by the partition walls when the exhaust gas passes through the partition walls, and purified gas from which the particulate matter is removed flows out from the outflow cells.

There has conventionally been proposed a ceramic honeycomb structure having R portions of almost an arc shape in one pair of corners facing each other in a cross section perpendicular to an axial direction of at least a part of passages (cells) in order to inhibit breakage due to excessive thermal shock or mechanical shock caused in the intersection of the partition walls of the honeycomb structure (see, e.g., JP-A-2003-269131). In addition, there has been proposed a honeycomb structure having reinforced cells by forming a reinforcer in a corner portion of a cell separated and formed by porous partition walls (see, e.g., JP-A-2009-532197).

However, since the arc-shaped R portions are formed in corner portions of all the cells in the honeycomb structure described in JP-A-2003-269131, the capacity of the passages where a fluid passes is remarkably reduced. As a result, from the viewpoint of deposition of ash contained in the exhaust gas, the plugged honeycomb structure has deteriorated durability.

In addition, in honeycomb structures described in JP-A-2003-269131 and JP-A-2009-532197, since the reinforcement is performed also in the inflow cells into which a fluid flows, the capacity of the passages (in particular, the capacity on the fluid inflow side) is reduced. This reduces the filtration area substantially functioning as a filter, and the pressure loss of the plugged honeycomb structure increases.

Further, since the mass of the plugged honeycomb structure naturally increases due to the formation of the reinforcing portions, excessive formation of the reinforcing portions may be detrimental to the performance of the plugged honeycomb structure. For example, if the mass of the plugged honeycomb structure is increased, the period of time until the honeycomb structure has the temperature necessary for purification of exhaust gas or the like increases, and exhaust gas purification performance is impaired. In addition, though raising the temperature of the exhaust gas can be considered in order to maintain the aforementioned purification performance, the fuel consumption of the internal engine of an automobile or the like is deteriorated.

That is, in a conventional honeycomb structure, reinforcing portions as described above have been formed for the purpose of simply improving strength of the honeycomb structure. However, by improving durability by forming reinforcing portions, other properties as a filter, such as pressure loss and purification performance have been sacrificed. In particular, the improvement of strength of a honeycomb structure and the inhibition of increase in pressure loss have been considered to be paradoxical, and solution of both at the same time has been considered very difficult.

In the case of using a plugged honeycomb structure as a DPF, regeneration, where trapped particulate matter is combusted and removed, may be performed. In this occasion, the plugged honeycomb structure may have a breakage such as a crack on an end face (hereinbelow sometimes referred to as an "end face crack"). There is a specific tendency in the positions where an end face crack is caused, and development of a plugged honeycomb structure taking measures against the end face crack is desired.

The document US 2007/169451 A1 teaches to reinforce an outer wall of a honeycomb channel.

The EP1484100 A1 and WO2008037919 A1 describe honeycomb segments having reinforcements in the peripheral wall.

### Summary of the Invention

The present invention has been made in view of the aforementioned problems and provides a plugged honeycomb structure capable of inhibiting increase in pressure loss and improving durability in a good manner by sufficiently securing the capacity of the cells into which a fluid flows (inflow cells).

According to the present invention, there is provided the plugged honeycomb structures shown below.

A plugged honeycomb structure comprising: a honeycomb structure having porous partition walls separating and forming a plurality of cells extending from an inflow side end face to the outflow side end face and functioning as fluid passages, outflow side plugging portions disposed in openings of predetermined cells on the outflow side end face and forming inflow cells each of which has an open inflow side end face and a plugged outflow side end face, and inflow side plugging portions disposed in openings of remaining cells on the inflow side end face and forming outflow cells each of which has an open outflow side end face and a plugged inflow side end face; wherein the opening shape of the outflow cells in a cross section perpendicular to the cell extension direction is quadrangular, at least one outflow cell contained in an included angle of ±15° with at least one diagonal line drawn in the centroid cell including the centroid of the cross section or being present at the position having the shortest distance from the centroid as the center in the cross section perpendicular to the cell extension direction of the honeycomb structure is a reinforced cell having a reinforcing portion for reinforcing the outflow cell in at least one corner portion where the partition walls intersect one another in the cross section perpendicular to the cell extension direction, and the inflow cells and the outflow cells other than the reinforced cell are unreinforced cells having no reinforcing portion in any of all the corner portions where the partition walls intersect one another in the cross section perpendicular to the cell extension direction.

The plugged honeycomb structure according to [1], wherein each of the reinforced cells includes a reinforced corner portion having the reinforcing portion formed therein and an unreinforced corner portion having no reinforcing portion formed therein.

The plugged honeycomb structure according to [1], wherein all the corner portions in each of the reinforced cells have reinforcing portions formed therein.

The plugged honeycomb structure according to any one of [1] to [3], wherein at least the outflow cells located on the diagonal line are reinforced cells.

The plugged honeycomb structure according to any one of [1] to [4], wherein the inflow cells and the outflow cells are alternately disposed with the partition wall therebetween.

The plugged honeycomb structure according to any one of [1] to [5], wherein the opening shape of the inflow cell in the cross section perpendicular to the cell extension direction is the same as the opening shape, excluding the reinforcing portion, of the outflow cell in the cross section perpendicular to the cell extension direction.

The plugged honeycomb structure according to any one of [1] to [6], wherein the ratio of the intersection distance in the partition wall intersection portion from the surface of the reinforcing portion of the reinforced cell to the surface of another cell disposed across the intersection of the partition walls separating and forming the reinforced cell with respect to an average thickness of the partition walls excluding the reinforcing portion is 1.5 to 9.3.

The plugged honeycomb structure according to any one of [1] to [7], wherein the reinforcing portion accounts for 0.05 to 20% of the area of the opening excluding the reinforcing portion in the cross section perpendicular to the cell extension direction.

In a plugged honeycomb structure of the present invention, the "outflow cell contained in an included angle of ±15° with at least one diagonal line drawn in the centroid cell including the centroid of the cross section or present at the position having the shortest distance from the centroid as the center in the cross section perpendicular to the cell extension direction of the honeycomb structure is a reinforced cell having a reinforcing portion for reinforcing the outflow cell in at least one corner portion where the partition walls intersect one another in the cross sectionperpendiculartothecellextensiondirection", and the "inflow cells each having an opening on the inflow side end face and the sealed outflow side end face" and the outflow cells other than the reinforced cell are unreinforced cells having no reinforcing portion in any of all the corner portions where the partition walls intersect one another in the cross section perpendicular to the cell extension direction. Therefore, the capacity of the inflow cells (i.e., unreinforced cells) having no reinforcing portions formed therein and the area of the openings of the inflow cells can sufficiently be secured, and therefore the increase in pressure loss can be inhibited. Meanwhile, in a part of outflow cells having small influence on the pressure loss in comparison with the inflow cells, a reinforcing portion is formed in at least one corner portion where the partition walls intersect, which can improve durability of the plugged honeycomb structure in a good manner. This can make the plugged honeycomb structure excellent in mechanical strength.

In particular, in a plugged honeycomb structure of the present invention, the capacity of the reinforcing portions taking up the passages is half or less in comparison with a conventional honeycomb structure where reinforcing portions are formed in both the inflow cells and the outflow cells. However, the durability of the honeycomb structure can be improved at a ratio not less than the capacity ratio of the reinforcing portions. In addition, since only the outflow cells having the maximum thermal stress caused in the plugged honeycomb structure are reinforced, excessive increase in the mass of the plugged honeycomb structure can be inhibited. Therefore, in the case of using the plugged honeycomb structure in an exhaust gas passage of an internal combustion engine, the plugged honeycomb structure can easily be heated, and deterioration in purification performance against the exhaust gas can be inhibited in a good manner. Incidentally, even in the case of adjusting the temperature of the plugged honeycomb structure by the temperature of the exhaust gas, since the plugged honeycomb structure is easily heated, deterioration in fuel consumption of the internal combustion engine of an automobile or the like can be inhibited. Thus, according to a plugged honeycomb structure of the present invention, the improvement of durability of a honeycomb structure and the inhibition of increase in pressure loss, which have conventionally been consideredtobeparadoxical, are compatible. Further, there can be inhibited deterioration in purification performance and deterioration in fuel consumption of the internal combustion engine.

Further, a plugged honeycomb structure of the present invention can be used as a DPF and can inhibit the generation of an end face crack upon regeneration for combusting and removing particulate matter trapped by the DPF in a good manner. That is, upon the regeneration, an end face crack frequently generates along a diagonal direction in a centroid cell in the outflow side end face. In a plugged honeycomb structure of the present invention, generation of an end face crack can be inhibited in a good manner by making a "cell contained in an included angle of ±15° with at least one diagonal line drawn in the centroid cell including the centroid of the cross section or being present at the position having the shortest distance from the centroid as the center in the cross section perpendicular to the cell extension direction of the honeycomb structure" a reinforced cell having a reinforced corner portion to reinforce a portion where an end face crack is easily generated and inhibit an end face crack from generating in a good manner.

### Brief Description of the Drawings

[Fig. 1] Fig. 1 is a perspective view schematically showing one embodiment of a plugged honeycomb structure of the present invention.

[Fig. 2] Fig. 2 is a schematic view showing an outflow side end face of one embodiment of a plugged honeycomb structure of the present invention.

[Fig. 3] Fig.3 is a schematic view showing an enlarged inflow side end face of one embodiment of a plugged honeycomb structure of the present invention.

[Fig. 4] Fig. 4 is a schematic view showing an enlarged outflow side end face of one embodiment of a plugged honeycomb structure of the present invention.

[Fig. 5] Fig. 5 is a schematic view showing an enlarged cross section perpendicular to the cell extension direction of one embodiment of a plugged honeycomb structure of the present invention.

[Fig. 6] Fig. 6 is a schematic view showing a cross section parallel to the cell extension direction of one embodiment of a plugged honeycomb structure of the present invention.

[Fig. 7] Fig. 7 is a schematic view showing the outflow side end face of another embodiment of a plugged honeycomb structure of the present invention.

[Fig. 8] Fig. 8 is a schematic view showing an enlarged cross section perpendicular to the cell extension direction of one embodiment of a plugged honeycomb structure of the present invention.

### Reference numerals

1: partition wall, 2: cell, 2a: inflow cell, 2b: outflow cell, 2x: centroid cell, 3: outer peripheral wall, 4: honeycomb structure, 5a: inflow side plugging portion, 5b: outflow side plugging portion, 6, 6x: reinforcing portion, 11: inflow side end face, 12: outflow side end face, 21, 21a: corner portion, 22: reinforced cell, 23: unreinforced cell, 100, 110: plugged honeycomb structure, A, B, C, D: line (parallel line), E, F, G, H: intersection point, L: intersection distance of a partition wall intersection portion, T: average thickness of partition wall, P1, P2: diagonal line (extension of diagonal line), Q1, Q2, R1, R2: line

### Detailed Description of the Invention

Hereinbelow, an embodiment of the present invention will be described specifically with referring to drawings. However, the present invention is by no means limited to the following embodiment, and it should be understood that an embodiment where changes, improvements, or the like is added to the following embodiment on the basis of ordinary knowledge of a person of ordinary skill in the art in a range of not deviating from the gist of the present invention is also included in the range of the present invention.

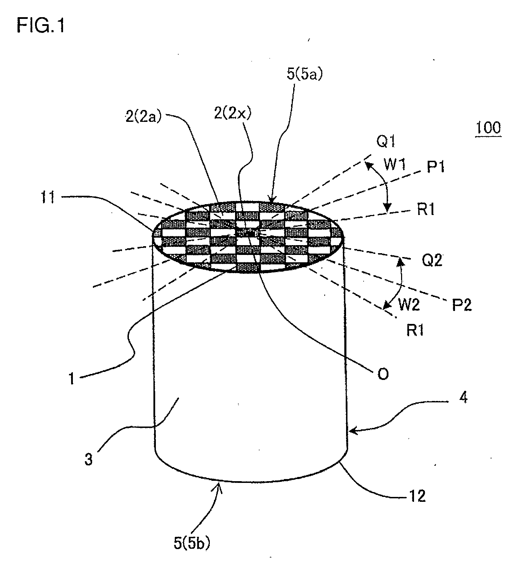

(1) Plugged honeycomb structure:
As shown in Figs. 1 to 6, one embodiment (plugged honeycomb structure 100) of a plugged honeycomb structure of the present invention is provided with a "honeycomb structure 4 having porous partition walls 1 separating and forming a plurality of cells 2 extending from an inflow side end face 11 to the outflow side end face 12 and functioning as fluid passages", an "outflow side plugging portions 5b disposed in openings of predetermined cells on the outflow side end face 12 and forming inflow cells 2a each of which has an open inflow side end face 11 and a plugged outflow side end face 12", and an "inflow side plugging portions 5a disposed in openings of remaining cells on the inflow side end face 11 and forming outflow cells 2b each of which has an open outflow side end face 12 and a plugged inflow side end face 11". The opening shape of the outflow cells 2b in a cross section perpendicular to the cell extension direction of the cells 2 of the honeycomb structure 100 of the present embodiment is quadrangular. There is no particular limitation on the opening shape of the inflow cells 2a in the aforementioned cross section, and it may be quadrangular as in the opening shape of the outflow cells 2b, or may be at least one shape selected from the group consisting of a triangle, a hexagon, and an octagon.

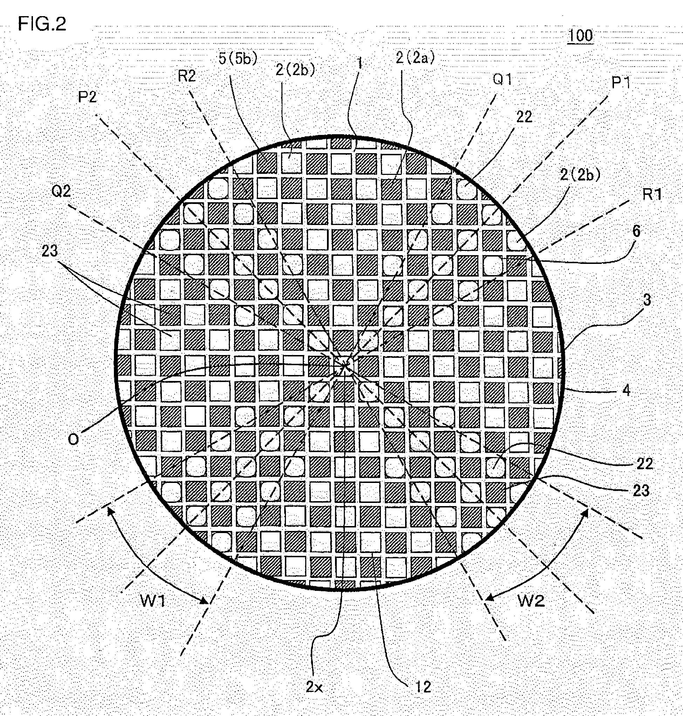

Among the outflow cells 2b, the "at least one outflow cell 2b contained in an included angle of ±15° with at least one diagonal line (two diagonal lines P1, P2 in Figs. 1 and 2) drawn in the centroid cell 2x including the centroid O of the cross section or being present at the position having the shortest distance from the centroid O of the cross section as the center in the cross section perpendicular to the cell 2 extension direction of the honeycomb structure 100" is a reinforced cell 22 having a reinforcing portion 6 for reinforcing the outflow cell 2b in at least one corner portion 21a where the partition walls 1 intersect one another in the cross section perpendicular to the cell 2 extension direction.

In addition, the inflow cells 2a and the outflow cells 2b other than the reinforced cell 22 are unreinforced cells 23 having no reinforcing portion 6 in any of all the corner portions 21 where the partition walls 1 intersect one another in the cross section perpendicular to the cell 2 extension direction.

That is, in a plugged honeycomb structure 100 of the present embodiment, the reinforcing portion 6 is not formed in the inflow cells 2a into which a fluid flows, and the cells are separated and formed by, for example, partition walls 1 having relatively uniform partition wall thickness. All the inflow cells 2a forming in the plugged honeycomb structure 100 are such unreinforced cells 23.

Meanwhile, in at least one cell among the outflow cells 2b from which a fluid flows out, a reinforcing portion 6 is formed in at least one corner portion 21a where the partition walls 1 intersect one another. The outflow cell 2b reinforced by such a corner portion 21a functions as the reinforced cell 22. The regions where the reinforced cells 22 are formed are regions in the included angles of ±15° with the diagonal lines p1, P2 drawn in the aforementioned centroid cell 2x as the centers.

As shown in Fig. 2, the "centroid cell" means the cell including the centroid of the cross section or present at the position having the shortest distance from the centroid in the cross section perpendicular to the cell extension direction of the honeycomb structure 100. That is, in the case that a cell is present at the centroid of the aforementioned cross section, the cell functions as the centroid cell. On the other hand, in the case that a partition wall is present at the centroid of the cross section with no cell being present, the cell present in the position having the shortest distance from the centroid of the cross section of the honeycomb structure is determined as the centroid cell. The "distance from the centroid of the cross section of the honeycomb structure" means the distance from the centroid of the cross section of the honeycomb structure to the centroid of each of the cells disposed on the cross section. Therefore, in the case that a cell is present at the centroid of the cross section, the cell functions as the "cell present at the position having the shortest distance from the centroid of the cross section of the honeycomb structure". The "diagonal line drawn in the centroid cell" means a straight line connecting corner portions facing each other among the four corner portions of the centroid cells of a cross section perpendicular to the cell extension direction of the honeycomb structure.

The "regions in the included angles of ± 15° with diagonal lines as the centers" means, as shown in Fig. 2, the regions W1 and W2 between the line segments R1, R2 crossing at an angle of +15° (plus in a clockwise direction) with the centroid as the center and the line segments Q1, Q2 crossing at an angle of -15° with the centroid as the center while assuming the extensions of the diagonal lines P1, P2 drawn in the centroid cell 2x. Incidentally, when the angle is considered, the angle may be taken in a clockwise direction or in a counterclockwise direction from the "0° direction (i.e., diagonal lines P1, P2)". However, in the case of considering a plurality of angles for one honeycomb structure, all the angles should be taken in the same rotation direction. The "included angle" means an angle between two straight lines intersecting each other.

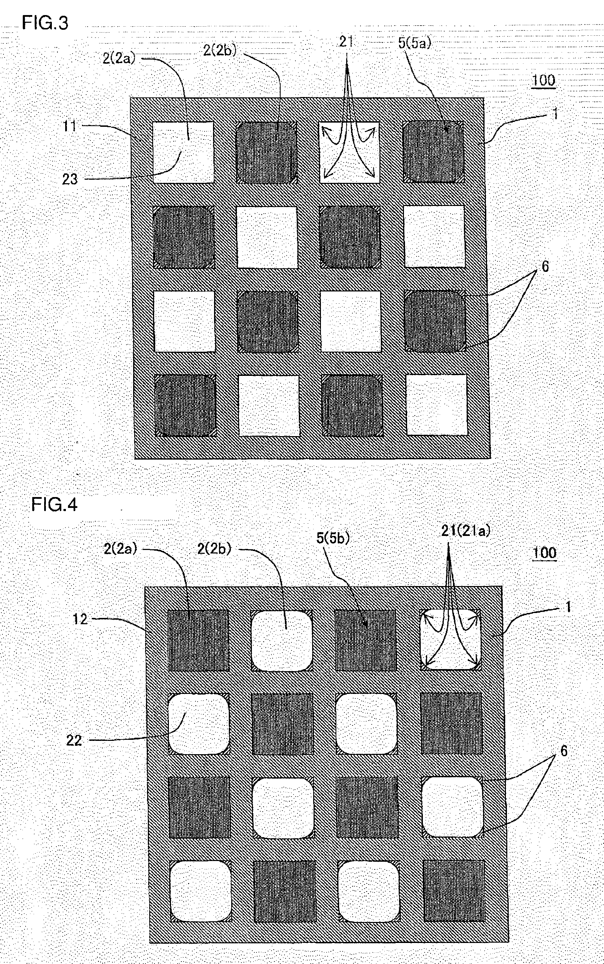

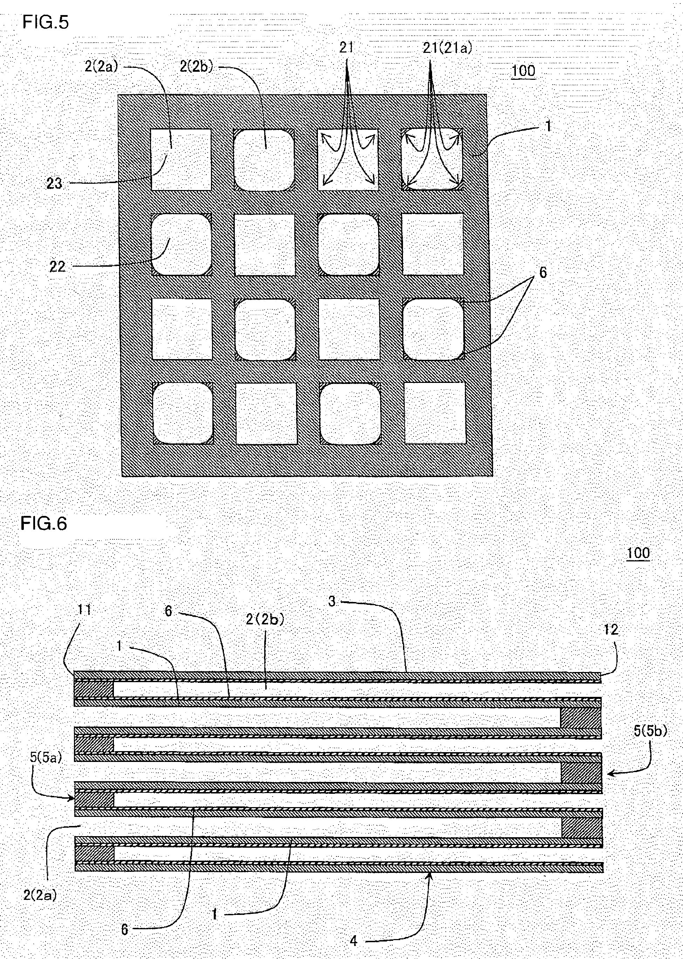

Here, Fig. 1 is a perspective view schematically showing one embodiment of a plugged honeycomb structure of the present invention. Fig. 2 is a schematic view showing an outflow side end face of one embodiment of a plugged honeycomb structure of the present invention. Fig.3 is a schematic view showing an enlarged inflow side end face of one embodiment of a plugged honeycomb structure of the present invention. Fig. 4 is a schematic view showing an enlarged outflow side end face of one embodiment of a plugged honeycomb structure of the present invention. Fig. 5 is a schematic view showing an enlarged cross section perpendicular to the cell extension direction of one embodiment of a plugged honeycomb structure of the present invention. Fig. 6 is a schematic view showing a cross section parallel to the cell extension direction of one embodiment of a plugged honeycomb structure of the present invention. Incidentally, Figs. 3 and 4 show examples where the reinforced cells and the unreinforced cells are alternately disposed in the included angles of ±15° with a diagonal line of the centroid cell as the center.

In the plugged honeycomb structure 100 of the present embodiment, the capacity of the inflow cells 2a having no reinforcing portion 6 (i.e., unreinforced cells 23) and the area of the openings of the inflow cells 2a (filtration area) can sufficiently be secured. This enables to inhibit increase in pressure loss of the plugged honeycomb structure in a good manner. On the other hand, in a part of the outflow cells 2b, which have small influence on the pressure loss in comparison with the inflow cell 2a, a reinforcing portion 6 is formed in at least one corner portion 21a where the partition walls 1 intersect one another, thereby improving durability of the plugged honeycomb structure 100 in a good manner. This makes the plugged honeycomb structure 100 excellent in mechanical strength.

In particular, in the plugged honeycomb structure 100 of the present embodiment, the capacity of the reinforcing portions 6 with respect to the passages (cells 2) is half or less in comparison with a conventional honeycomb structure where reinforcing portions are formed in both the inflow cells and the outflow cells. However, the durability of the honeycomb structure can be improved at the ratio of at least the proportion of the capacity of the reinforcing portions 6.

In addition, since only the outflow cells 2b where the thermal stress generated in the plugged honeycomb structure 100 becomes the maximum are reinforced, excessive increase of the mass of the plugged honeycomb structure 100 can be inhibited. Therefore, in the case of using the plugged honeycomb structure 100 mounted in an exhaust gas passage of an internal combustion engine, the plugged honeycomb structure 100 is easily heated to be able to inhibit deterioration of the purification performance against the exhaust gas in a good manner. Incidentally, even in the case of adjusting the temperature of the plugged honeycomb structure 100 by the temperature of the exhaust gas, since the plugged honeycomb structure 100 is easily heated, deterioration in fuel consumption of the internal combustion engine of an automobile or the like can be inhibited.

Further, a plugged honeycomb structure of the present invention can be used as a DPF and can inhibit the generation of an end face crack upon regeneration for combusting and removing particulate matter trapped by the DPF in a good manner. That is, upon the regeneration, an end face crack frequently generates along a diagonal direction in a centroid cell in the outflow side end face. In the plugged honeycomb structure of the present embodiment, generation of an end face crack can be inhibited in a good manner by making the "cell contained in an included angle of ±15° with at least one diagonal line drawn in the centroid cell including the centroid of the cross section or being present at the position having the shortest distance from the centroid as the center in the cross section perpendicular to the cell extension direction of the honeycomb structure" a reinforced cell having a reinforced corner portion to reinforce a portion where an end face crack is easily generated. In addition, since the plugged honeycomb structure of the present embodiment has no deterioration in the ash deposition amount, the strength of the honeycomb structure can be improved without affecting the rise in pressure loss after the deposition of ash and the interval of washing the ash or changing the exhaust gas purification filter (e.g., DPF).

The "reinforcing portion" means a portion disposed in a corner portion where partition walls separating and forming the cells intersect one another and reinforcing the strength (durability) of the partition walls, which are substantial portions of the honeycomb structure. For example, the "reinforcing portion" may be of another member (e.g., a reinforcing member of a depressed portion or a beam) separately disposed in a corner portion where partition walls intersect one another in order to reinforce the corner portion. In addition, the "reinforcing portion" may be a portion where the corner portion where the partition walls intersect one another is formed thickly to have an R shape, C shape, or the like in a different manner as in the other corner portions (e.g., a corner portion of an unreinforced cell or a corner portion having no reinforcing portion even in a reinforced cell.

In the case that the reinforcing portion is of another member separately disposed for reinforcing a corner portion, a reinforcing portion having an arbitrary shape can be disposed in a predetermined corner portion in the manufacturing of the honeycomb structure. Therefore, regardless of the shape of the die for forming the honeycomb structure, various reinforcing cells can be realized. On the other hand, in the case that the reinforcing portion is made of a corner portion formed thickly, the reinforcing portion can be formed in a predetermined outflow cell (reinforced cell) upon manufacturing the honeycomb structure (more specifically, upon forming the honeycomb formed body). Thus, the reinforcing portion can be formed very simply.

The "reinforced cell" is a cell where at least one corner portion among the corner portions formed in the outer peripheral portion of the cell is reinforced by the aforementioned "reinforcing portion". That is, the "reinforced cell" may contain a reinforced corner portion where a reinforcing portion is formed and an unreinforced corner portion where no reinforcing portion is formed. In addition, in the "reinforced cell", the reinforcing portions may be formed in all the corner portions in the reinforced cell (i.e., may have all the corner portions as the reinforced corner portions).

For example, the reinforced cell having both the reinforced corner portion and the unreinforced corner portion can inhibit the decrease of the capacity of the outflow cells, and increase in pressure loss can further be inhibited. On the other hand, the reinforced cell having all the corner portions as the reinforced corner portions can improve durability of the plugged honeycomb structure in a good manner.

As described above, in a plugged honeycomb structure of the present embodiment, the "at least one outflow cell contained in an included angle of ±15° with at least one diagonal line as the center" may be the reinforced cell. That is, as shown in Fig. 2, all the outflow cells 2b contained in the regions of the included angle of ±15° with diagonal lines P1, P2 drawn in the centroid cell 2x as the centers may be the reinforced cells 22. Though the illustration is omitted, a part of the outflow cells 2b in Fig. 2 may be the reinforced cells 22, and the outflow cells 2b other than the reinforced cells 22 may be the unreinforced cells 23 where no reinforcing portion 6 is formed as in the inflow cells 2a and the outflow cells 2b outside the ranges in the aforementioned angle of ±15°.

Incidentally, even if the outflow cells outside the ranges in the angle of ±15° are further reinforced, the effect in further improving the durability of the plugged honeycomb structure can hardly be obtained, and the pressure loss of the plugged honeycomb structure increases. That is, by the reinforcement for the outflow cells in the aforementioned included angle of ±15°, the durability of the plugged honeycomb structure can be improved, and the increase in pressure loss can be inhibited in a good manner. In addition, even if the outflow cells outside the ranges in the angle of ±15° are further reinforced, the effect in inhibiting the generation of an end face crack (in particular, an end face crack generating along a diagonal direction (45° direction)) can hardly be obtained.

In the plugged honeycomb structure of the present embodiment, it is preferable that all the outflow cells located on at least one diagonal line are reinforced cells, and it is more preferable that all the outflow cells located on both the (two) diagonal lines are reinforced cells. Further, it is particularly preferable that, among the outflow cells in the angle of ±15° with one diagonal line as the center, at least the corners disposed parallel to the diagonal line located in the center of the included angle are reinforced.

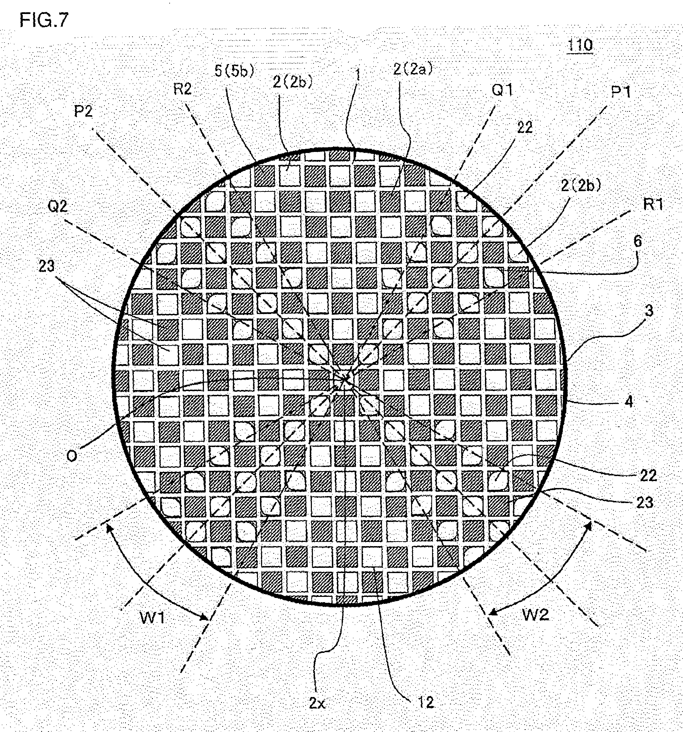

For example, as the plugged honeycomb structure 110 shown in Fig. 7, it is preferable that all the outflow cells 2b located on the two diagonal lines P1, P2 have reinforcing portions 6 in all the corner portions of each of the outflow cells 2b (i.e., all the corner portions are reinforced), that the other outflow cells 2b in the included angle between the line Q1 and the line R1 have reinforcing portions 6 only in the corner portions disposed parallel to the diagonal line P1, and that the outflow cells 2b in the included angle between the line Q2 and the line R2 have reinforcing portions 6 only in the corner portions disposed parallel to the diagonal line P2. Such a configuration enables to improve the durability in a good manner while inhibiting the decrease in capacity of the outflow cells 2b. Here, Fig. 7 is a schematic view showing the outflow side end face of another embodiment of a plugged honeycomb structure of the present invention.

Though there is no particular limitation on the shape of the honeycomb structure 4 in the plugged honeycomb structure 100 of the present embodiment, preferred are a cylindrical shape, a tubular shape having an elliptic end face, a prismatic columnar shape having a polygonal end face such as "a square, a rectangle, a triangle, a pentagon, a hexagon, and an octagon", and the like. Figs. 1 to 6 show an example where the honeycomb structure 4 is cylindrical. Though the honeycomb structure 4 shown in Figs. 1 to 6 has the outer peripheral wall 3, it is not necessary to have the outer peripheral wall 3. It is preferable that the outer peripheral wall 3 is formed together with the partition walls when the honeycomb formed body is obtained by extrusion in the process of producing the honeycomb structure. In addition, the outer peripheral wall 3 may be formed by applying a ceramic material to the outer periphery of the honeycomb structure.

The "inflow cell" is a cell having an outflow side plugging portion at the opening of the cell on the outflow side end face. A fluid such as exhaust gas flows in from the opening on the inflow side end face of the inflow cell. On the other hand, the "outflow cell" is a cell having an inflow side plugging portion at the opening of the cell on the inflow side end face. A fluid such as exhaust gas cannot flow into the outflow cells directly, and the fluid having flown into the inflow cells passes through the partition walls, flows into the outflow cells, and is discharged from the openings on the outflow side end faces of the outflow cells. When the fluid moves from the inflow cells to the outflow cells, particulate matter in the fluid is trapped by the porous partition walls.

There is no particular limitation on the disposition of the inflow cells and the outflow cells, in other words, disposition of the outflow side plugging portions and the inflow side plugging portions. For example, the inflow cells and the outflow cells may be disposed alternately across the partition walls. A part of the inflow cells or a part of the outflow cells may be assembled in one portion of an end face of the honeycomb structure. However, from the viewpoint of trapping particulate matter in a fluid by partition walls in a good manner, it is preferable that the inflow cells and the outflow cells are disposed alternately across the partition walls.

The shape (opening shape in a cross section perpendicular to the cell extension direction) of each of the outflow cells is quadrangular. The aforementioned cell shape means a shape in the state where the reinforcing portion is removed regarding the cell having a reinforcing portion formed therein. Further, in the plugged honeycomb structure of the present embodiment, the opening shape (hereinbelow sometimes simply referred to the "opening shape of the inflow cell") in the cross section perpendicular to the cell extension direction of the inflow cell and the opening shape ((hereinbelow sometimes simply referred to the "opening shape of the outflow cell") of the outflow cells where the reinforcing portion is removed in the cross section perpendicular to the cell extension direction may be the same or different from each other. The shape of the outflow cell is preferably rectangular, more preferably square.

In a plugged honeycomb structure of the present embodiment, the thickness of the partition wall constituting the honeycomb structure in a cross section perpendicular to the cell extension direction (hereinbelow sometimes simply referred to as the "thickness of the partition walls") is basically uniform. "Basically uniform" means that the thickness of the partition walls is uniform except for the case of having slight variance in thickness due to deformation or the like upon forming. That is, in the plugged honeycomb structure of the present embodiment, no variance in partition wall thickness is caused intentionally, and the thickness of the partition walls in the aforementioned cross section is uniform. For example, in the case of producing slits of a die for extruding a honeycomb structure by slicer-machining, the aforementioned partition walls having uniform thickness are realized. In the plugged honeycomb structure of the present embodiment, the portion where a part (particularly, corner portion) of the partition walls is formed thickly in comparison with the other portions in the partition walls supposedly having uniform thickness can be regarded as the portion where a reinforcing portion is formed.

The thickness of the partition walls is preferably 100 to 600 µm, more preferably 110 to 560 µm, particularly preferably 280 to 420 µm. When it is smaller than 100 µm, strength of the plugged honeycomb structure may be low. When it is larger than 600 µm, the initial pressure loss of the plugged honeycomb structure may be high.

The porosity of the partition walls is preferably 30 to 85%, more preferably 35 to 70%, particularly preferably 40 to 65%. When the porosity is below 30%, the initial pressure loss of the plugged honeycomb structure may be high. When the porosity is above 85%, the strength of the plugged honeycomb structure may be low. The porosity is measured by a mercury porosimeter.

The average pore size of the partition walls is preferably 5 to 40 µm, more preferably 10 to 25 µm, particularly preferably 13 to 23 µm. When the average pore size is smaller than 5 µm, the initial pressure loss of the plugged honeycomb structure may be high. When the average pore size is larger than 40 µm, the strength of the plugged honeycomb structure may be low. The average pore size is measured by a mercury porosimeter.

Though there is no particular limitation on the cell density of the honeycomb structure, it is preferably 10 to 70 cells/cm², more preferably 15 to 50 cells/cm². When the cell density is below 10 cells/cm², the strength of the plugged honeycomb structure may be low. When the cell density is above 70 cells/cm², the pressure loss may be high because the cross sectional area of the cells (area of a cross section perpendicular to the cell extension direction) becomes small.

As the material for the partition walls, ceramic is preferable. Because of excellent strength and thermal resistance, further preferred is at least one selected from the group consisting of cordierite, silicon carbide, silicon-silicon carbide based composite material, mullite, alumina, aluminum titanate, silicon nitride, and silicon carbide-cordierite based composite material. Of these, cordierite is particularly preferable.

Though there is no particular limitation on the material for the reinforcing portion, ceramic is preferable, and the above materials mentioned as preferable materials for the partition walls may suitably be used. In the plugged honeycomb structure of the present embodiment, it is preferable that the thermal expansion coefficient of the partition walls is the same as or close to the thermal expansion coefficient of the reinforcing portion. It is more preferable that the material for the reinforcing portion is the same as the material for the partition wall. Such a configuration enables to inhibit peeling of the reinforcing portion from the honeycomb structure or breakage of the bonding portion between the reinforcing portion and the partition wall even if thermal stress is applied to the plugged honeycomb structure. Incidentally, in the case that the reinforcing portion is formed unitarily with the partition walls, the material for the reinforcing portion is the same as the material for the partition walls.

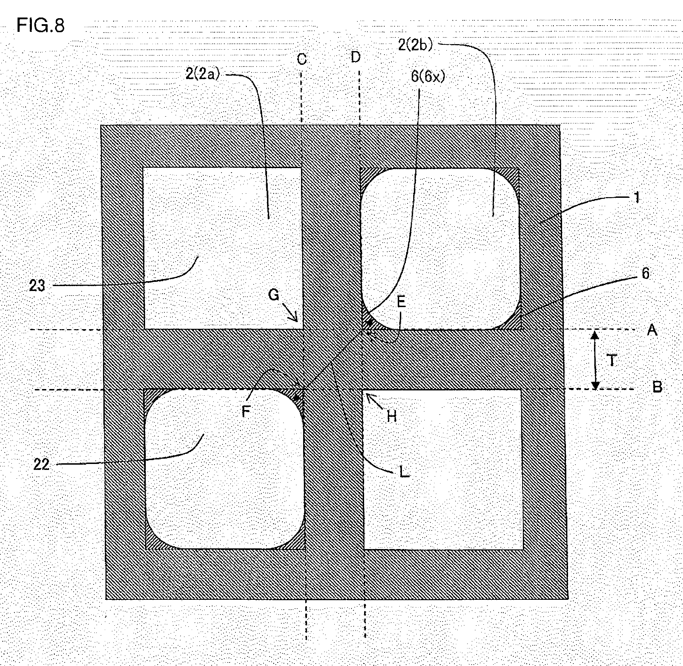

There is no particular limitation on the size of the reinforcing portion as long as the reinforcing portion has a size where it is disposed in at least one corner portion of partition walls separating and forming an outflow cell and does not completely cover the opening portion of the outflow cell substantially. However, if the opening portion of the outflow cell is largely covered by the reinforcing portion, the pressure loss is increased. Therefore, as shown in Fig. 8, in the plugged honeycomb structure of the present embodiment, the ratio (L/T) of the "intersection distance L in the partition wall intersection portion from the surface of the reinforcing portion 6 of the reinforced cell 22 (outflow cell 2b) to the surface of another cell (reinforced cell 22 disposed on the diagonal line in Fig. 8) disposed across the intersection of the partition walls 1 separating and forming the reinforced cell 22" with respect to the "average thickness T (hereinbelow sometimes referred to as the "average thickness T of the partition walls 1") of the partition walls 1 excluding the reinforcing portion 6" is preferably 1.5 to 9.3. Such a configuration enables to realize the inhibition of increase in pressure loss and the improvement in durability in a balanced manner. Fig. 8 is a schematic view showing an enlarged cross section perpendicular to the cell extension direction of one embodiment of a plugged honeycomb structure of the present invention.

Here, the ratio (L/T) of the "intersection distance L in the partition wall intersection portion from the surface of the reinforcing portion 6 of the reinforced cell 22 to the surface of another cell disposed across the intersection of the partition walls 1 separating and forming the reinforced cell 22" with respect to the "average thickness T of the partition walls 1 excluding the reinforcing portion 6 (hereinbelow sometimes referred to as the "average thickness T of the partition walls 1")" will be described. As shown in Fig. 8, in the first place, the parallel lines A,B, C, and D are drawn along the partition walls 1 of portions where no reinforcing portion 6 is formed, and the average distance between the lines is determined as the "average thickness T of the partition walls 1". In addition, the intersection points of the parallel lines A, B, C, and D are determined as E, F, G, and H. Here, the length of the distance between two cells, the length being measured so as to pass both the intersection point (intersection point E) closest to the target reinforcing portion 6x and the intersection point (intersection point F) closest to the other cell (the other cell is also a reinforced cell 22 in Fig. 8) disposed across the intersection point of the partition walls 1, is determined as the "intersection distance L in the partition wall intersection portion". The value obtained by dividing the value of the "intersection distance L in the partition wall intersection portion" measured by the aforementioned method by the value of the "average thickness T of the partition walls 1" is the aforementioned "ratio (L/T)".

Fig. 8 shows the case where both the targeted reinforced cell 22 having the reinforcing portion 6x and the other cell disposed across the intersection point of the partition walls 1 are the reinforced cells 22. However, for example, there is a case where the other cell disposed across the intersection point of the partition walls 1 is an unreinforced cell 23 or a case where even the reinforced cell 22 does not have a reinforcing portion in the corner portion of the partition walls though which depends on the disposition of the reinforcing portion 6x. Even in such cases, the "ratio (L/T)" can be obtained by the aforementioned method. The measurement of the aforementioned "ratio (L/T)" can be conducted with an optical microscope.

When the ratio (L/T) of "intersection distance L in the partition wall intersection portion" with respect to "average thickness T of the partition walls 1" is below 1.5, it may be impossible to obtain the effect in improving the durability by the reinforcing portion sufficiently. On the other hand, when the ratio (L/T) of "intersection distance L in the partition wall intersection portion" with respect to "average thickness T of the partition walls 1" is above 9. 3, the opening area of the reinforced cell 22 is reduced too much, which may excessively increase pressure loss. In addition, even if the ratio is above 9.3, the durability may hardly be improved further, and therefore the ratio of increase in pressure loss may be raised. The aforementioned ratio (L/T) is more preferably 1.6 to 5.0, particularly preferably 1.7 to 2.7.

Incidentally, in the unreinforced cells in the honeycomb structure of the present embodiment, no reinforcing portion is formed in the corners where the partition walls intersect one another. However, even the unreinforced cell where no reinforcing portion is formed intentionally may have a very slightly thick portion in the corner having no reinforcing portion due to abrasion or the like of a die for extruding the honeycomb structure. Therefore, in the honeycomb structure of the present embodiment, regarding the case that the aforementioned ratio (L/T) is below 1.5, no reinforcing portion is considered to be formed in the corner. For example, in the case that no reinforcing portion is formed in a corner portion at all in a cell having a square opening portion shape and that no unintended thick portion is formed, the ratio (L/T) is 1.41.

Each of the reinforcing portions (one reinforcing portion) preferablyhas a size covering 0.05 to 20% of the area of the opening portion where the reinforcing portion is removed in a cross section perpendicular to the cell extension direction. When the area covered by the reinforcing portion is below 0.05% of the area of the opening portion, the reinforcing effect by the reinforcing portion may be exhibited insufficiently. In addition, when the area covered by the reinforcing portion is above 20% of the area of the opening portion, for example, in the case that the reinforcing portion is formed in all the four corner portions of the square cell, the opening area of the reinforced cell becomes too small, and it may increase the pressure loss of the plugged honeycomb structure. The size of each reinforcing portion is the size where more preferably 0.1 to 12%, particularly preferably 0.4 to 5%, of the area of the opening portion where the reinforcing portion is removed in a cross section perpendicular to the cell extension direction is covered.

The reinforcing portion may be formed in the entire region from the inflow side end face to the outflow side end face of the reinforced cell or may be formed in a part of the longitudinal direction (cell extension direction) of the honeycomb structure from the inflow side end face of the reinforced cell. For example, in the case that the reinforcing portion is formed over the entire region from the inflow side end face to the outflow side end face of the reinforced cell, the durability of the plugged honeycomb structure in the entirely longitudinal direction can be improved in a good manner. On the other hand, in the case that the reinforcing portion is formed in a part of the honeycomb structure in the longitudinal direction, while improving the durability on the outflow side end face, the capacity of the outflow cells is improved to be able to inhibit the increase of the pressure loss by increasing the outflow cell capacity.

(2) Method for manufacturing plugged honeycomb structure:
The method for manufacturing the plugged honeycomb structure of the present embodiment will be described. In the first place, kneaded material for manufacturing a honeycomb structure is prepared, and the kneaded material is formed to manufacture a honeycomb formed body (forming step). Upon this forming, it is preferable that a reinforcing portion is formed in at leastapart (i.e., cells contained in the included angle of ±15° with at least one diagonal line drawn in the centroid cell as the center) of cells functioning as outflow cells in the resultant plugged honeycomb structure to form a reinforced honeycomb formed body. It is also possible that the reinforcing portion may be formed in one of the honeycomb formed body, honeycomb dried body obtained by drying the honeycomb formed body, and honeycomb structure obtained by firing the honeycomb dried body after the honeycomb formed body is obtained without forming the reinforcing portion in a cell upon forming. The specific method will be described in more detail in each step described later.

In addition, at the time of manufacturing a honeycomb formed body, it is preferable to determine the inflow side end face and the outflow side end face for using it as a plugged honeycomb structure. That is, in the plugged honeycomb structure of the present embodiment, since the cell shape (i.e., present/absent of the reinforcing portion) is different between the inflow side end face and the outflow side end face (in other wards, between the inflow cell and the outflow cell), it is preferable to determine the direction of the columnar honeycomb formed body in advance.

Next, the honeycomb formed body (or the honeycomb dried body after drying performed as necessary) obtained above is fired to manufacture a honeycomb structure (honeycomb structure manufacturing step). In the case that no reinforcing portion is formed in the forming step, a reinforcing portion is formed in at least a part of cells to serve as the outflow cells before or after the firing.

Next, plugging is performed in the opening portions of predetermined cells on the inflow side end face of the honeycomb formed body and the opening portions of the remaining cells on the outflow side end face to form inflow side plugging portions and outflow side plugging portions (plugging step). Thus, the plugged honeycomb structure of the present embodiment can be manufactured in this manner. Hereinbelow, each manufacturing step will be described in more detail.

(2-1) Forming step:
In the first place, in the forming step, a ceramic forming raw material containing a ceramic raw material is formed to form a honeycomb formed body separating and forming a plurality of cells to function as fluid passages.

The ceramic raw material contained in the ceramic forming raw material preferably contains at least one kind selected from the group consisting of cordierite-forming raw material, cordierite, mullite, alumina, titania, silicon carbide, and aluminum titanate, is more preferably at least one kind selected from the group consisting of cordierite-forming raw material, cordierite, mullite, alumina, titania, silicon carbide, and aluminum titanate, and is particularly preferably one kind selected from the group consisting of cordierite-forming raw material, cordierite, mullite, alumina, titania, silicon carbide, and aluminum titanate. The cordierite-forming raw material means a ceramic raw material blended to have a chemical composition of 42 to 56 mass% of silica, 30 to 45 mass% of alumina, and 12 to 16 mass% of magnesia and to form cordierite by firing.

It is preferable that the ceramic forming raw material is prepared by mixing a dispersion medium, an organic binder, an inorganic binder, a pore former, a surfactant, and the like to the aforementioned ceramic raw material. There is no particular limitation on the compounding ratio of the raw materials, and the compounding ratio is preferably according to the structure, material, and the like of the honeycomb structure to be manufactured.

When the ceramic forming raw material is formed, it is preferable that, in the first place, the forming raw material is kneaded to obtain a kneaded material, which is then formed into a honeycomb shape. There is not particular limitation on the method for forming the kneaded material by kneading the forming raw material, and, for example, a method using a kneader, a vacuum kneader, or the like may be employed. There is no particular limitation on the method for forming a honeycomb formed body by forming the kneaded material, and a conventionally known forming method such as extrusion or injection may be employed. A suitable example is a method of forming a honeycomb formed body by extrusion using a die having a desired cell shape, partition wall thickness, and cell density. As the material for the die, a superhard alloy, which hardly abrades, is preferable.

At the time of the forming, reinforced honeycomb formed body can be formed by forming a reinforcing portion in a specific one or more cells among the cells to be the outflow cells in the plugged honeycomb structure obtained. For example, it is preferable to use a die where the slit shape of the die for forming a honeycomb structure is constituted to be able to selectively form a cell having the reinforcing portion (reinforced cell) and a cell having no reinforcing portion (unreinforced cell). The aforementioned "specific one or more cells" mean cells contained in the included angle of ±15° with at least one diagonal line drawn in the centroid cell containing the centroid of the cross section or present in the position having the shortest distance from the centroid in a cross section perpendicular to the cell extension direction of the honeycomb structure as the center.

As the die capable of selectively forming a reinforced cell and an unreinforced cell, there can be mentioned a die having a die base having two faces, where honeycomb-shaped slits are formed in a lattice pattern on one face, while a back hole communicating with the slits is formed on the other face in order to introduce the forming raw material. It is preferable that, in this die, the vertex of at least one corner portion in the intersection point for forming an outflow cell from which a fluid flows out in the resultant honeycomb structure among the intersection points where the slits intersect one another is chamfered in a curved or planar manner. The use of such a die enables to selectively form a reinforcing portion in a desired cell upon forming the honeycomb structure. In addition, a depressed portion or a beam may be provided at the intersection point of the slits of the die so that the corner portion of the outflow cell can be reinforced.

There is no particular limitation on the shape of the honeycomb formed body, and the shape may be cylindrical (circular columnar) or tubular (columnar) with a cross section perpendicular to the central axis having a shape of an ellipse, a race track, a polygon such as a triangle, a quadrangle, a pentagon, a hexagon, and an octagon, or the like. In the case that the honeycomb structure to be manufactured is formed by bonding a plurality of honeycomb segments, the honeycomb formed body preferably has a tubular (columnar) shape where a cross section perpendicular to the central axis is a polygon such as a triangle, a quadrangle, a pentagon, a hexagon, and an octagon.

After the forming, the honeycomb formed body may be dried. Though there is no particular limitation on the drying method, there may be mentioned, for example, hot air drying, microwave drying, dielectric drying, reduced pressure drying, vacuum drying, and freeze drying. Of these, dielectric drying, microwave drying, or hot air drying is preferably performed alone or in combination.

(2-2) Honeycomb structure manufacturing step:
Next, it is preferable to obtain a honeycomb structure by firing the honeycomb formed body obtained above. The firing of the honeycomb formed body may be performed after disposing the plugging portions.

It is preferable to calcine the honeycomb formed body before firing (main firing) the honeycomb formed body. The calcination is for degreasing. There is no particular limitation on the calcination method as long as the organic substances (organic binder, dispersant, pore former, etc.) in the formed body can be removed. Since, generally, the combustion temperature of an organic binder is about 100 to 300°C, and the combustion temperature of a pore former is about 200 to 800°C, it is preferable to perform calcination by heating at about 200 to 1000°C for about 3 to 100 hours in an oxidation atmosphere.

The firing (main firing) of the honeycomb formed body is performed in order to secure predetermined strength by densifying by sintering the forming raw material constituting the calcined formed body. Since the firing conditions (temperature, time, and atmosphere) depend on the kind of the forming raw material, suitable conditions maybe selected according to the kind. For example, in the case that a cordierite-forming raw material is used, the firing temperature is preferably 1410 to 1440°C. In addition, the firing period is preferably 4 to 6 hours as the highest temperature-keeping time.

In addition, in the case that no reinforcing portion is formed upon forming the honeycomb formed body, it is preferable to form a reinforcing portion by applying a reinforcing material having a depressed or beam-like shape to a corner portion of an outflow cell before and after firing.

Specifically, a reinforcing portion can be formed by a dipping method where a plugged honeycomb structure before or after firing is immersed in a slurried reinforcing material prepared in a container from the outflow side end face side. Alternatively, a reinforcing portion may be formed by a sucking method where the reinforcing material is sucked from the inflow side end face of the plugged honeycomb structure in the state that the outflow side end face of the plugged honeycomb structure is brought into contact with a similar slurried reinforcing material. Further, a reinforcing portion may be formed by an injection method where a similar slurried reinforcing material is injected from the outflow side end face of the plugged honeycomb structure. At this time, in order to inhibit impregnation of the inflow cell with the reinforcing material, it is preferable that the particle diameter of the reinforcing material components is adjusted to be larger than the average pore size of the partition walls of the honeycomb structure. In addition, in order to inhibit breakage of the reinforcing member or the honeycomb structure in practical use, it is preferable to adjust the thermal expansion coefficient of the reinforcing member to be equivalent to that of the plugged honeycomb structure.

Thus, there can be obtained a honeycomb structure having a reinforcing portion in at least one corner portion where partition walls intersect one another in a cross section perpendicular to the cell extension direction of a specific cell to be an outflow cell.

### (2-3) Plugging step:

Next, a plugging material is filled in the opening portions of the outflow cells on the fluid inflow side end face and the opening portions of the inflow cells on the fluid outflow side end face of the honeycomb structure to form plugging portions in the opening portions of the outflow cells on the inflow side end face and the opening portions of the inflow cells on the outflow side end face.

Upon filling the plugging material in the honeycomb structure, in the first place, the plugging material is filled on one end side, and then the plugging material is filled on the other end side. As the method for filling the plugging material on one end side, there can be mentioned a method having a masking step where a sheet is applied on one end face (e.g., inflow side end face) of the honeycomb structure to make holes in positions corresponding to the "cells where the plugging portions are to be formed" and an injection step where the "end portion having the sheet applied thereon of the honeycomb structure" is inserted into the container containing the plugging material under pressure to inject the plugging material into the cells of the honeycomb structure. Upon injecting the plugging material into the cells of the honeycomb structure, the plugging material passes through the holes formed in the sheet and is filled only into the cells communicating with the holes.

The method for filling the plugging material on the other end portion (e.g., outflow side end face) side of the honeycomb structure is preferably the same as the aforementioned method for filling the plugging material on one end portion side of the honeycomb structure. In addition, the plugging material may be filled simultaneously in both the end portions of the honeycomb structure.

Next, it is preferable to obtain a plugged honeycomb structure by forming plugging portion by drying the plugging material filled into the honeycomb structure. Incidentally, the plugging material may be dried after the plugging material is filled in both the end portion of the honeycomb structure. Alternatively, after drying the plugging material filled in one end portion of the honeycomb structure, the plugging material may be filled in the other end portion and then dried. The plugging material may be fired for the purpose of securer fixation. It is also possible that the plugging material is filled in the honeycomb formed body before or after drying and then fired together with the honeycomb formed body before or after drying.

Such a configuration enables to manufacture the plugged honeycomb structure of the present embodiment. However, the method for manufacturing the plugged honeycomb structure of the present embodiment is not limited to the aforementioned manufacturing method.

### Example

Hereinbelow, the present invention will be described more specifically with Examples. However, the present invention is by no means limited to these Examples.

### (Example 1)

As the ceramic raw material, there was used a cordierite-forming raw material (alumina, talc, kaolin). The mass ratio of alumina, talc, and kaolin was determined so that cordierite might be obtained after firing. To the ceramic raw material were mixed a binder (methyl cellulose) and water to obtain a ceramic forming raw material. The ceramic forming raw material obtained above was kneaded with a kneader to obtain kneaded material.

Next, the kneaded material was formed with a vacuum kneader to obtain a honeycomb formed body. The honeycomb formed body had a shape where the honeycomb structure after firing the honeycomb formed body might have a partition wall thickness of 0.305 mm, a density of 46.5 cells/cm², and a cell pitch of 1.47 mm. In addition, the entire shape of the honeycomb structure after firing the honeycomb formed body was cylindrical (with an end face diameter of 143.8 mm and a length in the cell extension direction of 152.4 mm). The entire shape of the honeycomb formed body was formed unitarily (unitary structure) and is shown as a "monolith" in the column of the "structure of honeycomb structure" in Table 1.

In the honeycomb formed body, reinforcing portions were formed in the corner portions where the partition walls intersect one another in the outflow cells (cells to function as outflow cells later) present on the extensions of the two diagonal lines drawn in the centroid cell upon forming. It is shown as the "diagonal line" in the column of the "position of reinforced cell" in Table 1.

In the outflow cells (reinforced cells) having reinforcing portions formed therein, the ratio (hereinbelow referred to as the "intersection ratio (L/T) of reinforced cell") of the "intersection distance L of the partition wall intersection portion from the surface of a reinforcing portion of a reinforced cell to the surface of another cell disposed across the intersection point of the partition walls separating and forming the reinforced cell" with respect to the "average thickness T of the partition walls excluding the reinforcing portions" was 2.200. The measurement of the intersection ratio was conducted with an optical microscope.

On the other hand, in the inflow cells and the outflow cells having no reinforcing portions formed therein, the ratio (hereinbelow referred to as the "intersection ratio (L/T) of unreinforced cell") of the "intersection distance L of the partition wall intersection portion from the surface of a cell having no reinforced cell to the surface of another cell disposed across the intersection point of the partition walls separating and forming this cell" with respect to the "average thickness T of the partition walls excluding the reinforcing portions" was 1.410. The intersection ratio (L/T) was measured according to the measurement method described above with referring to Fig. 8.

Next, a mask was applied on a part of the plural cell openings on the end faces (end faces on inflow and outflow sides) of the honeycomb formed bodies. At this time, cells having the mask and cells having no mask were alternately arranged. That is, the outflow cells and the inflow cells were alternately arranged across the partition walls. The end portion where the mask was applied was immersed in plugging slurry containing the cordierite-forming raw material to fill the plugging slurry in the openings of the cells having no mask. Thus, a plugged honeycomb formed body having plugging portions disposed in the openings of the outflow cells on the inflow side end face and the openings of the inflow cells on the outflow side end face was obtained.

Next, the plugged honeycomb formed body was degreased by heating at 450°C for 5 hours. Further, firing was performed at 1425°C for 7 hours to obtain a plugged honeycomb structure.

The plugged honeycomb structure obtained above was measured for "maximum main stress (MPa)", "pressure loss (kPa) ", and "presence/absence of end face crack". The measurement results are shown in Table 1.

### [Maximum main stress (MPa)]

The geometry structure of the plugged honeycomb structure is constructed from a CAD model, and the maximum main stress generated in the structure constructed from the model is obtained by a finite element method analysis software (trade name: ANSYS Release 11.0) produced by ANSYS Japan K. K. At that time, "partition wall thickness", "cell density", "cell pitch", "diameter of bottom face", "length in cell extension direction", "intersection point ratio of inflow cell or outflow cell", "length of plugging portion", and "outer wall thickness" are given as parameters of the geometry structure of the structure; and "Young's modulus", "Poisson's ratio", and "thermal expansion coefficient" of the honeycomb structure measured in advance are given in the finite element method analysis, and at the same time, a temperature distribution generated in a plugged honeycomb structure obtained by a soot combustion test conducted in advance is appropriately given to be able to obtain the aimed maximummain stress. In Table 1, the maximummain stress is shown as "6g/LDTI maximum stress upon regeneration (MPa)".

In addition, the "ratio of the maximum stress (MPa) of Examples 1, 6, 7, 8 and Comparative Examples 4 to 6 with respect to the maximum stress (MPa) of Comparative Example 1", the "ratio of the maximum stress (MPa) of Examples 2 and 4 with respect to the maximum stress (MPa) of Comparative Example 2", and the "maximum stress (MPa) of Examples 3 and 5 with respect to the maximum stress (MPa) of Comparative Example 3" are shown as the "base ratios" of the maximum stress.

### [Pressure loss (kPa)]

The pressure loss of the plugged honeycomb structure was measured by the use of the "pressure loss measuring apparatus for a filter" described in JP-A-2005-172652. As the measurement conditions, the flow rate of the fluid was 10 Nm³/min., and the fluid temperature upon the experiment was 25°C.

In addition, "ratio of the pressure loss (kPa) of Examples 1, 6, 7, 8 and Comparative Examples 4 to 6 with respect to the pressure loss (kPa) of Comparative Example 1", "ratio of the pressure loss (kPa) of Examples 2 and 4 with respect to the pressure loss (kPa) of Comparative Example 2", and "ratio of the pressure loss (kPa) of Examples 3 and 5 with respect to the pressure loss (kPa) of Comparative Example 3" are shown as the base ratios of pressure loss.

### [Present/absent of end face crack]

Crack generation in end face portions of the honeycomb structure after the soot combustion test was judged by eye observation, and evaluation of "present" was given to the case of having crack generation, while evaluation of "absent" was given to the case of having no crack generation. The soot combustion test is conducted as the following method. The plugged honeycomb structure is used as a DPF, where soot is deposited to conduct regeneration (soot combustion). In the first place, a ceramic thermally unexpandable mat is wrapped around the outer periphery of the plugged honeycomb structure as a holding material, and the structure is pressed into a stainless steel (SUS409) can to obtain a canning structure. Then, the soot-containing combustion gas generated by the combustion of a diesel fuel (light oil) is sent from one end face of the plugged honeycomb structure and discharged from the other end face. By this operation, the soot of 6g per 1 liter of the capacity of the plugged honeycomb structure is deposited in the plugged honeycomb structure. After cooling the plugged honeycomb structure down to room temperature (25°C), combustion gas at 680°C is sent from one end face of the plugged honeycomb structure. By combusting the deposited soot, when the pressure loss of the plugged honeycomb structure falls, the flow rate of the combustion gas is reduced, thereby combusting the soot quickly.

**Table 1**

| | Structure of honeycomb structure | Unreinforced cell intersection ratio | Reinforced cell intersection ratio | Position of reinforced cell | Partition wall thickness | Cell pitch | 6 g/LDTI maximum stress upon regeneration | | Pressure loss | | Presence/ absence of end face crack |
|---|---|---|---|---|---|---|---|---|---|---|---|
| | | | | | mm | mm | MPa | Base ratio | kPa | Base ratio | |
| Example 1 | Monolith | 1.410 | 2.200 | Diagonal line | 0.305 | 1.47 | 14.6 | 0.50 | 2.37 | 1.003 | Absent |
| Example 2 | Monolith | 1.410 | 2.700 | Diagonal line | 0.127 | 2.54 | 6.9 | 0.48 | 0.93 | 1.004 | Absent |
| Example 3 | Monolith | 1.410 | 1.700 | Diagonal line | 0.508 | 1.47 | 3.6 | 0.52 | 5.19 | 1.003 | Absent |
| Example 4 | Monolith | 1.410 | 9.300 | Diagonal line | 0.127 | 2.54 | 2.9 | 0.20 | 0.96 | 1.027 | Absent |
| Example 5 | Monolith | 1.410 | 1.500 | Diagonal line | 0.508 | 1.47 | 5.6 | 0.80 | 5.18 | 1.001 | Absent |
| Example 6 | Monolith | 1.410 | 2.200 | Diagonal line ±15° | 0.305 | 1.47 | 14.0 | 0.48 | 2.38 | 1.009 | Absent |
| Example 7 | Monolith | 1.410 | 10.000 | Diagonal line | 0.305 | 2.54 | 2.8 | 0.20 | 1.11 | 1.199 | Absent |
| Example 8 | Monolith | 1.410 | 2.200 | Diagonal line (formed later) | 0.305 | 1.47 | 14.6 | 0.50 | 2.37 | 1.003 | Absent |
| Comp. Ex. 1 | Monolith | 1.410 | 1.410 | - | 0.305 | 1.47 | 29.2 | 1.00 | 2.36 | 1.00 | Present |
| Comp. Ex. 2 | Monolith | 1.410 | 1.410 | - | 0.127 | 2.54 | 14.3 | 1.00 | 0.93 | 1.00 | Absent |
| Comp. Ex. 3 | Monolith | 1.410 | 1.410 | - | 0.508 | 1.27 | 7.0 | 1.00 | 5.18 | 1.00 | Absent |
| Comp. Ex. 4 | Monolith | 1.410 | 2.200 | Diagonal line ±20° | 0.305 | 1.47 | 14.3 | 0.49 | 2.48 | 1.050 | Absent |
| Comp. Ex. 5 | Monolith | 1.410 | 2.200 | All cells | 0.305 | 1.47 | 13.3 | 0.46 | 2.58 | 1.09 | Absent |

### (Examples 2 to 8, and Comparative Examples 1 to 5)

The plugged honeycomb structures were manufactured in the same manner as in Example 1 except that the partition wall thickness, cell pitch, and cells for forming a reinforcing portion (presence/absence of a reinforcing portion) of the honeycomb structures were changed as shown in Table 1 and that the intersection ratio (L/T) of reinforced cells and the intersection ratio (L/T) of unreinforced cells were changed as shown in Table 1. The plugged honeycomb structures were evaluated in the same manner as in Example 1. The results are shown in Table 1. Incidentally, in Example 8, no reinforcing portion was formed upon forming the honeycomb formed body, and the reinforcing portions were formed separately after the honeycomb formed body was formed by using a reinforcing material for forming the reinforcing portions. Specifically, in the first place, the same material as the ceramic forming raw material (cordierite-forming raw material) used for the honeycomb formed body was used, and slurried reinforcing material was prepared. The reinforcing material was prepared so as to have a higher water content than the ceramic forming raw material used for the honeycomb formed body. Next, the reinforcing material was put in a container, and the plugged honeycomb formed body was immersed in the reinforcing material from the outflow side end face to form reinforcing portions. The shape of the reinforcing portions was made the same as the reinforcing portions in Example 1.

In Example 6, all the outflow cells included in the included line of ±15°C with the diagonal lines of the centroid cell as the centers were reinforced cells. In Comparative Example 4, all the outflow cells included in the included line of ±20°C with the diagonal lines of the centroid cell as the centers were reinforced cells. In Comparative Examples 1 to 3, no reinforcing portion is formed in any of the outflow cells to make the inflow cells and the outflow cells unreinforced cells. In the Comparative Example 5, the reinforcing portion is formed in all the outflow cells to form reinforced cells.

### (Results)

As shown in Table 1, each of the plugged honeycomb structures of Examples 1 to 8 had small maximum stress and excellent durability. In addition, in comparison with the plugged honeycomb structure of Comparative Examples 4 and 5, the pressure loss was suppressed. That is, it was found out that excessive increase of the reinforcing cells seriously increases pressure loss as in the plugged honeycomb structures of Comparative Examples 4 and 5 without increasing the effect in improving durability to a large extent. In addition, when the plugged honeycomb structures of Examples 1 to 8 were compared with the plugged honeycomb structures of Comparative Examples 1 to 3, where no reinforcing portion was formed, remarkable improvement in durability (maximum stress) was confirmed in the plugged honeycomb structures of Examples 1 to 8, and, in particular, an end face crack, which was found in Comparative Example 1, was not confirmed in Example 1.
Meanwhile, no large increase in pressure loss was found.

### Industrial Applicability

A plugged honeycomb structure of the present invention can suitably be used as a filter for purifying gas discharged from an internal combustion engine such as a diesel engine or various combustion apparatus.

## Claims

1. A plugged honeycomb structure comprising:
a honeycomb structure having porous partition walls separating and forming a plurality of cells extending from an inflow side end face to the outflow side end face and functioning as fluid passages,
outflow side plugging portions disposed in openings of predetermined cells on the outflow side end face and forming inflow cells each of which has an open inflow side end face and a plugged outflow side end face, and
inflowsidepluggingportionsdisposedinopenings of remaining cells on the inflow side end face and forming outflow cells each of which has an open outflow side end face and a plugged inflow side end face;
wherein the opening shape of the outflow cells in a cross section perpendicular to the cell extension direction is quadrangular,
at least one outflow cell contained in an included angle of ±15° with at least one diagonal line drawn in the centroid cell including the centroid of the cross section or being present at the position having the shortest distance from the centroid as the center in the cross section perpendicular to the cell extension direction of the honeycomb structure is a reinforced cell having a reinforcing portion for reinforcing the outflow cell in at least one corner portion where the partition walls intersect one another in the cross section perpendicular to the cell extension direction, and
the inflow cells and the outflow cells other than the reinforced cell are unreinforced cells having no reinforcing portion in any of all the corner portions where the partition walls intersect one another in the cross section perpendicular to the cell extension direction.

2. The plugged honeycomb structure according to Claim 1, wherein each of the reinforced cells includes a reinforced corner portion having the reinforcing portion formed therein and an unreinforced corner portion having no reinforcing portion formed therein.

3. The plugged honeycomb structure according to Claim 1, wherein all the corner portions in each of the reinforced cells have reinforcing portions formed therein.

4. The plugged honeycomb structure according to any one of Claims 1 to 3, wherein at least the outflow cells located on the diagonal line are reinforced cells.

5. The plugged honeycomb structure according to any one of Claims 1 to 4, wherein the inflow cells and the outflow cells are alternately disposed with the partition wall therebetween.

6. The plugged honeycomb structure according to any one of Claims 1 to 5, wherein the opening shape of the inflow cell in the cross section perpendicular to the cell extension direction is the same as the opening shape, excluding the reinforcing portion, of the outflow cell in the cross section perpendicular to the cell extension direction.

7. The plugged honeycomb structure according to any one of Claims 1 to 6, wherein the ratio of the intersection distance in the partition wall intersection portion from the surface of the reinforcing portion of the reinforced cell to the surface of another cell disposed across the intersection of the partition walls separating and forming the reinforced cell with respect to an average thickness of the partition walls excluding the reinforcing portion is 1.5 to 9.3.

8. The plugged honeycomb structure according to any one of Claims 1 to 7, wherein the reinforcing portion accounts for 0.05 to 20% of the area of the opening excluding the reinforcing portion in the cross section perpendicular to the cell extension direction.

## Patentansprüche

1. Verschlossene Wabenstruktur, umfassend:
eine Wabenstruktur mit porösen Trennwänden, die eine Vielzahl an Zellen trennen und ausbilden, die sich von einer Einströmungsseitenendfläche bis zur Ausströmungsseitenendfläche erstrecken und als Fluiddurchlässe fungieren,
Ausströmungsseitenverschlussabschnitte, die in Öffnungen von vorbestimmten Zellen auf der Ausströmungsseitenendfläche angeordnet sind und Einströmungszellen ausbilden, die jeweils eine offene Einströmungsseitenendfläche und eine verschlossene Ausströmungsseitenendfläche aufweisen, und
Einströmungsseitenverschlussabschnitte, die in Öffnungen von verbleibenden Zellen auf der Einströmungsseitenendfläche angeordnet sind und Ausströmungszellen ausbilden, die jeweils eine offene Ausströmungsseitenendfläche und eine verschlossene Einströmungsseitenendfläche aufweisen;
wobei die Öffnungsform der Ausströmungszellen in einem Querschnitt senkrecht auf die Zellerstreckungsrichtung viereckig ist,
wobei zumindest eine in einem Öffnungswinkel von ± 15 ° enthaltene Ausströmungszelle, wobei zumindest eine Diagonale in der Schwerpunktzelle gezogen ist, die den Schwerpunkt des Querschnitts umfasst oder in der Position mit dem kürzesten Abstand vom Schwerpunkt als Mittelpunkt im Querschnitt senkrecht auf die Zellerstreckungsrichtung der Wabenstruktur vorhanden ist, eine verstärkte Zelle ist, die einen Verstärkungsabschnitt zum Verstärken der Ausströmungszelle in zumindest einem Eckabschnitt aufweist, in dem die Trennwände einander im Querschnitt senkrecht auf die Zellerstreckungsrichtung kreuzen, und
wobei die Einströmungszellen und die Ausströmungszellen, die von den verstärkten Zellen verschieden sind, nicht verstärkte Zellen sind, die keinen Verstärkungsabschnitt in einem von sämtlichen Eckabschnitten, in denen die Trennwände einander im Querschnitt senkrecht auf die Zellerstreckungsrichtung kreuzen, aufweisen.

2. Verschlossene Wabenstruktur nach Anspruch 1, wobei jede der verstärkten Zellen einen verstärkten Eckabschnitt, in dem der verstärkte Abschnitt ausgebildet ist, sowie einen nicht verstärkten Eckabschnitt umfasst, in dem kein darin ausgebildeter verstärkter Abschnitt ausgebildet ist.

3. Verschlossene Wabenstruktur nach Anspruch 1, wobei in allen Eckabschnitten in jeder der verstärkten Zellen Verstärkungsabschnitte ausgebildet sind.

4. Verschlossene Wabenstruktur nach einem der Ansprüche 1 bis 3, wobei zumindest die Ausströmungszellen, die auf der Diagonalen angeordnet sind, verstärkte Zellen sind.

5. Verschlossene Wabenstruktur nach einem der Ansprüche 1 bis 4, wobei die Einströmungszellen und die Ausströmungszellen abwechselnd mit den Trennwänden dazwischen angeordnet sind.

6. Verschlossene Wabenstruktur nach einem der Ansprüche 1 bis 5, wobei die Öffnungsform der Einströmungszelle im Querschnitt senkrecht auf die Zellerstreckungsrichtung dieselbe ist wie die Öffnungsform der Ausströmungszelle im Querschnitt senkrecht auf die Zellerstreckungsrichtung, mit Ausnahme des Verstärkungsabschnitts.

7. Verschlossene Wabenstruktur nach einem der Ansprüche 1 bis 6, wobei das Verhältnis des Abstands des Schnittpunkts im Trennwandschnittabschnitt von der Oberfläche des Verstärkungsabschnitts der verstärkten Zellen zur Oberfläche einer weiteren Zelle, die gegenüber des Schnittpunkts der Trennwände, die die verstärkte Zelle trennt und ausbildet, liegt, in Bezug auf eine Durchschnittsdicke der Trennwände mit Ausnahme des Verstärkungsabschnitts 1, 5 zu 9,3 ist.

8. Verschlossene Wabenstruktur nach einem der Ansprüche 1 bis 7, wobei der Verstärkungsabschnitt 0,05 bis 20 % der Fläche der Öffnung mit Ausnahme des Verstärkungsabschnitts im Querschnitt senkrecht auf die Zellerstreckungsrichtung ausmacht.

## Revendications

1. Structure en nid d'abeilles obturée comprenant :
une structure en nid d'abeilles comportant des parois de séparation poreuses séparant et formant une pluralité de cellules s'étendant d'une face d'extrémité côté flux d'entrée jusqu'à la face d'extrémité côté flux de sortie et agissant en tant que passages de fluide,
des parties d'obturation côté flux de sortie disposées dans les ouvertures de cellules prédéterminées sur la face d'extrémité côté flux de sortie et formant des cellules de flux d'entrée ayant chacune une face d'extrémité côté flux d'entrée ouverte et une face d'extrémité côté flux de sortie obturée, et
des parties d'obturation côté flux d'entrée disposées dans les ouvertures des cellules restantes sur la face d'extrémité côté flux d'entrée et formant des cellules de flux de sortie ayant chacune une face d'extrémité côté flux de sortie ouverte et une face d'extrémité côté flux d'entrée obturée ;
dans laquelle la forme de l'ouverture des cellules de flux de sortie en coupe transversale perpendiculaire à la direction d'extension de cellule est quadrangulaire,
au moins une cellule de flux de sortie contenue dans un angle inclus de ± 15° avec au moins une diagonale tracée dans la cellule de centroïde comprenant le centroïde de la section transversale ou étant présente à la position ayant la distance la plus courte par rapport au centroïde en tant que centre en coupe transversale perpendiculaire à la direction d'extension de cellule de la structure en nid d'abeilles est une cellule renforcée comportant une partie de renforcement pour renforcer la cellule de flux de sortie dans au moins une partie de coin dans laquelle les parois de séparation se croisent en coupe transversale perpendiculaire à la direction d'extension de cellule, et
les cellules de flux d'entrée et les cellules de flux de sortie autres que la cellule renforcée sont des cellules non renforcées n'ayant aucune partie de renforcement dans l'une quelconque de toutes les parties de coin dans lesquelles les parois de séparation se croisent en coupe transversale perpendiculaire à la direction d'extension de cellule.

2. Structure en nid d'abeilles obturée selon la revendication 1, dans laquelle chacune des cellules renforcées comprend une partie de coin renforcée dans laquelle la partie de renforcement est formée et une partie de coin non renforcée dans laquelle aucune partie de renforcement n'est formée.

3. Structure en nid d'abeilles obturée selon la revendication 1, dans laquelle toutes les parties de coin dans chacune des cellules renforcées ont des parties de renforcement formées dans celles-ci.

4. Structure en nid d'abeilles obturée selon l'une quelconque des revendications 1 à 3, dans laquelle au moins les cellules de flux de sortie situées sur la diagonale sont des cellules renforcées.

5. Structure en nid d'abeilles obturée selon l'une quelconque des revendications 1 à 4, dans laquelle les cellules de flux d'entrée et les cellules de flux de sortie sont disposées de manière alternée avec la paroi de séparation entre elles.

6. Structure en nid d'abeilles obturée selon l'une quelconque des revendications 1 à 5, dans laquelle la forme de l'ouverture de la cellule de flux d'entrée en coupe transversale perpendiculaire à la direction d'extension de cellule est identique à la forme de l'ouverture, à l'exclusion de la partie de renforcement, de la cellule de flux de sortie en coupe transversale perpendiculaire à la direction d'extension de cellule.

7. Structure en nid d'abeilles obturée selon l'une quelconque des revendications 1 à 6, dans laquelle le rapport entre la distance d'intersection dans la partie d'intersection de parois de séparation de la surface de la partie de renforcement de la cellule renforcée jusqu'à la surface d'une autre cellule disposée de l'autre côté de l'intersection des parois de séparation séparant et formant la cellule renforcée et une épaisseur moyenne des parois de séparation à l'exclusion de la partie de renforcement est de 1,5 à 9,3.

8. Structure en nid d'abeilles obturée selon l'une quelconque des revendications 1 à 7, dans laquelle la partie de renforcement représente 0,05 à 20 % de l'aire de l'ouverture à l'exclusion de la partie de renforcement en coupe transversale perpendiculaire à la direction d'extension de cellule.
